# EUROPÄISCHE PATENTSCHRIFT

(11) **EP 3 405 378 B1**
(45) Veröffentlichungstag und Bekanntmachung des Hinweises auf die Patenterteilung: **11.09.2019**
(21) Anmeldenummer: 17701068.3
(22) Anmeldetag: 12.01.2017
(51) Int. Cl.: B62D 1/181

(54) **ELEKTRISCH LÄNGSVERSTELLBARE LENKSÄULE FÜR EIN KRAFTFAHRZEUG**
ELECTRICALLY LENGTH-ADJUSTABLE STEERING COLUMN FOR A MOTOR VEHICLE
COLONNE DE DIRECTION À RÉGLAGE ÉLECTRIQUE EN HAUTEUR POUR UN VÉHICULE À MOTEUR

(30) Priorität: 19.01.2016 DE 102016200649
(43) Veröffentlichungstag der Anmeldung: 28.11.2018
(73) Patentinhaber: ThyssenKrupp Presta AG, 9492 Eschen (LI); thyssenkrupp AG, 45143 Essen (DE)
(72) Erfinder: KREUTZ, Daniel, 6800 Feldkirch (AT); SAWALL, Stefan, 9473 Gams (CH)
(74) Vertreter: thyssenkrupp Intellectual Property GmbH
(86) Internationale Anmeldenummer: PCT/EP2017/050570
(87) Internationale Veröffentlichungsnummer: WO 2017/125311

(56) Entgegenhaltungen:
- EP-B1- 2 307 259
- DE-C1- 3 822 460
- US-A- 5 737 971

## Beschreibung

Die Erfindung betrifft eine verstellbare Lenksäule für ein Kraftfahrzeug, mit einer drehbaren Lenkspindel, die einen längs ihrer Drehachse axial verschiebbaren Spindelteil aufweist, der in einem Mantelrohr drehbar gelagert ist, welches in einem an einem karosseriefesten Halteteil gehaltenen Führungskasten axial gleitend gelagert und mittels eines Elektromotors verstellbar ist, wobei auf der Außenseite des Mantelrohrs eine Zahnstange angebracht ist, dass der Elektromotor an dem Führungskasten befestigt ist und ein Schneckenrad antreibt, welches durch eine Öffnung des Führungskastens in Richtung des Mantelrohrs hindurchragt und mit der Zahnstange in Eingriff steht.

Eine derartige verstellbare Lenksäule ist beispielsweise aus der WO 2014/117800 A1 bekannt. Die bekannte Lenksäule weist mehrere entlang der Umfangsfläche eines Mantelrohrs angebrachte Zahnstangen auf, die von einer Mutter umschlossen sind. Die Mutter ist mittels eines zahnriemens mit einem Elektromotor verbunden, der die Mutter drehen und damit das Mantelrohr verschieben kann. Ein Nachteil dieser Konstruktion besteht darin, dass mehrere Zahnstangen erforderlich sind.

Aus der US 5,737,971 A ist ebenfalls eine längs verstellbare Lenksäule für ein Kraftfahrzeug bekannt, bei der ein Mantelrohr gegen einen Führungskasten längs verschiebbar ist, wobei das Mantelrohr mittels wälzelementen am Führungskasten gelagert ist. Die Längsverstellung wird mittels eines Elektromotors bewirkt, der über ein Untersetzungsgetriebe mit einem Ritzel verbunden ist, welches mit einer am Mantelrohr befestigten zahnplatte in Eingriff steht. Das Untersetzungsgetriebe ist am Führungskasten befestigt. Nachteilig an dieser Konstruktion ist die aufwändige Lagerung des Mantelrohrs und des Führungskastens mittels wälzelementen. Ein weiterer Nachteil ist, dass das Untersetzungsgetriebe eine vielzahl von Bauteilen benötigt, um die Längsverstellung des Mantelrohrs gegenüber dem Führungskasten zu gewährleisten.

Aus der DE 33 18 935 C1 ist eine elektrisch verstellbare Lenksäule für ein Kraftfahrzeug bekannt, bei der ein inneres Mantelrohr teleskopisch in einem äußeren Mantelrohr axial verschiebbar angeordnet ist. Das innere Mantelrohr ist auf seiner Oberseite mit einer Verzahnung versehen, in die ein Schneckenrad eingreift, welches über ein Untersetzungsgetriebe mit einem Elektromotor verbunden ist. Nachteilig an dieser Konstruktion ist die Tatsache, dass das äußere Mantelrohr mit einer Öffnung zum Durchgang des Schneckenrades versehen sein muss und daher in seiner Stabilität geschwächt ist. Des weiteren ist der Einbauraum zwischen der Außenseite des inneren Mantelrohrs und der Innenseite des äußeren Mantelrohrs beschränkt, so dass sich konstruktive Einschränkungen für die Ausgestaltung der Verzahnung des inneren Mantelrohrs ergeben.

Aus der DE 38 22 460 C1 ist eine axial verstellbare Lenksäule mit den eingangs genannten Merkmalen bekannt, somit offenbarend den Oberbegriff des unabhängigen Anspruchs. Diese bietet im Crashfall jedoch nur eine eingeschränkte Insassensicherheit.

Aufgabe der Erfindung ist es, eine verbesserte Längsverstellung einer elektrisch verstellbaren Lenksäule für ein Kraftfahrzeug anzugeben, welche insbesondere kompakt ausgestaltet ist, mit einer reduzierten Anzahl der notwendigen Bauteile und deren Festigkeit und Steifigkeit unabhängig von der maximal möglichen Längsverstellung ist, und die eine erhöhte Sicherheit ermöglicht.

Die Aufgabe wird mit einer verstellbaren Lenksäule nach Anspruch 1 gelöst. Vorteilhafte weiterbildungen ergeben sich aus den unteransprüchen und der folgenden Beschreibung.

Die erfindungsgemäße Lösung besteht darin, dass wirkungsmäßig zwischen dem Mantelrohr und der Zahnstange eine Energieabsorptionsvorrichtung angeordnet ist, die im Crashfall eine axiale Verschiebung der Zahnstange gegenüber dem Mantelrohr unter Überwindung einer bauartbedingten verformungskraft erlaubt.

Die erfindungsgemäße längsverstellbare Lenksäule eignet sich auch besonders gut für die Integration einer zusätzlichen sicherheitsrelevanten Energieabsorptionsvorrichtung. Wenn wirkungsmäßig zwischen dem Mantelrohr und der Zahnstange eine Energieabsorptionsvorrichtung angeordnet ist, die im Crashfall eine axiale verschiebung der Zahnstange gegenüber dem Mantelrohr unter Überwindung einer bauartbedingten verformungskraft oder Abscherkraft erlaubt, wird mit vorteil zumindest ein Teil der in Axialrichtung auf die Lenksäule einwirkenden Crashkräfte gedämpft und die damit verbundene Bewegungsenergie in der Energieabsorptionsvorrichtung zur verformung oder Abscherkraft eines Energieabsorbers verwendet.

insbesondere kann auf einfache weise eine Energieabsorptionsvorrichtung vorgesehen sein, die einen unter der verformungskraft verformbaren Biegedraht aufweist. Dabei wird die eingeleitete Energie durch verformen des Biegedrahtes absorbiert. Ein solcher Biegedraht lässt sich auf einfache weise zwischen der Außenseite des Mantelrohrs und der Zahnstange unterbringen.

Eine andere Ausführungsform der Energieabsorptionsvorrichtung sieht vor, dass diese einen in einem Langloch angeordneten Gleitstein aufweist, der unter der verformungskraft durch das Langloch verschiebbar ist und dabei ein an das Langloch angrenzendes Material verformt. Auch diese Konstruktion kann auf einfache weise zwischen der Außenseite des Mantelrohrs und der Zahnstange untergebracht werden.

Durch die Befestigung des Elektromotors am Führungskasten wird eine steife Ausbildung der Lenkung erreicht. Ein Auftreten von unerwünschten Geräuschen, die der Elektromotor verursacht, lassen sich durch geräuschdämpfende Elemente reduzieren, wie beispielsweise Kunststoffelemente, welche am Führungskasten angebracht werden. Durch die Anordnung der Zahnstange auf der Außenseite des Mantelrohrs kann diese voluminöser und damit stärker ausgebildet sein als bei einer Anbringung auf der Außenseite des Mantelrohrs. Das Mantelrohr wird dabei mit vorteil nicht geschwächt. Damit hat die gesamte Konstruktion eine hohe Festigkeit und Steifigkeit. Die Länge der Zahnstange ist allein durch die Länge des Mantelrohrs begrenzt. Auf diese weise lassen sich verstellwege erreichen, welche über die im Stand der Technik beschriebenen 80mm hinausgehen. Diese können beispielsweise einen verstellweg von mehr als 150mm erreichen. Schließlich kann auch die Öffnung des Führungskastens relativ klein gehalten werden, weil diese lediglich das relativ kleine Schneckenrad hindurchlassen muss. Die Öffnung des Führungskastens kann in einer bevorzugten Ausführungsform eine Länge von weniger als 70 mm annehmen. Bei anderen Konstruktionen ist ein Langloch erforderlich, welches sich über die gesamte Länge der Zahnstange erstreckt. Durch die relativ knapp bemessene Öffnung im Führungskasten wird dieser in seiner Festigkeit und Steifigkeit praktisch nicht beeinträchtigt.

In einer weiterbildung der Erfindung ist vorgesehen, dass wirkungsmäßig zwischen dem Elektromotor und dem Schneckenrad ein Untersetzungsgetriebe angeordnet ist. Hierdurch wird das Drehmoment erhöht, so dass die für die Längsverstellung zur verfügung stehende Kraft vergrößert wird.

In einer bevorzugten Ausgestaltungsform der Erfindung weist das Untersetzungsgetriebe ein mit dem Schneckenrad drehfest verbundenes größeres Zahnrad auf, welches mit einem auf der Motorwelle des Elektromotors befestigten kleinen Zahnrad in Eingriff steht. Diese Konstruktion ist ganz besonders einfach herstellbar und ermöglicht eine platzsparende Anordnung des Elektromotors auf der Außenseite des Führungskastens, wobei die Drehachse des Elektromotors parallel zur Drehachse der Lenkspindel angeordnet ist. In einer weiteren Ausgestaltungsform der Erfindung ist es denkbar und möglich, dass das Untersetzungsgetriebe eine biegsame welle aufweist. Diese Konstruktion ermöglicht es, dass die Drehachse des Elektromotors versetzt zur Drehachse der Lenkspindel angeordnet ist. Eine weitere Ausgestaltung der Erfindung sieht vor, dass die Zahnstange aus Kunststoff besteht. Diese Maßnahme ermöglicht eine besonders kostengünstige Herstellung und ermöglicht Gewichtseinsparungen.

Eine weitere Ausgestaltung der Erfindung sieht vor, das die Schnecke aus Kunststoff besteht, wodurch Kosten und Gewicht vermindert werden können.

Um zwischen dem Schneckenrad und der Zahnstange möglichst hohe Axialkräfte übertragen zu können, müssen die miteinander in Eingriff stehenden Flächen der Zähne und der schraubenförmigen Flanken des Schneckenrads möglichst groß sein. Zur vergrößerung der in Kontakt stehenden Flächen dient daher die Maßnahme, dass die Zahnstange eine rinnenförmig gebogene Außenseite aufweist, wobei der Biegungsradius an den Radius des Schneckenrades angepasst ist. Das Schneckenrad kann daher in die Rinne der Zahnstange eintauchen und wird von der Zahnstange über einen größeren winkelbereich von beispielsweise 30° umschlossen als dies bei einer ebenen Zahnstange der Fall wäre. Dadurch kommen jeweils größere Flächen der Verzahnung der Zahnstange und der Schraubenwindungen des Schneckenrades miteinander in Berührung, so dass größere Kräfte übertragbar sind, ohne dass die Gefahr einer Überlastung besteht. Die beschriebene Konstruktion wird auch als "Schraubverzahnung" oder "Halbgloboid" oder Globoid bezeichnet.

Durch die Maßnahme, dass die Länge des Schneckenrades in Drehachsrichtung an die im Crashfall zu übertragenen Kräfte angepasst ist, lässt sich der axiale Bauraum des Schneckenrades bei gegebenen Axialkräften im Crashfall minimieren. Damit kann auch die zum Durchtritt des Schneckenrades im Führungskasten vorgesehene Öffnung so klein wie möglich ausgestaltet sein, wodurch einerseits der Führungskasten in seiner Stabilität praktisch nicht geschwächt wird und andererseits die im Crashfall auftretenden hohen Axialkräfte über die Verbindung Zahnstange-Schneckenrad übertragen werden, ohne dass die genannten Bauteile außer Eingriff geraten oder abscheren.

Ausführungsbeispiele der Erfindung werden nachfolgend anhand der Zeichnungen näher erläutert. Die Figuren zeigen im Einzelnen:
- Figur 1:: eine perspektivische Ansicht einer erfindungsgemäßen elektrisch längsverstellbaren Lenksäule für ein Kraftfahrzeug;
- Figur 2:: eine Draufsicht auf die Unterseite der Lenksäule von Figur 1;
- Figur 3:: eine Seitenansicht eines Teils der in Figur 1 gezeigten Lenksäule;
- Figur 4:: eine Seitenansicht der dem Lenkrad zugewandten Schmalseite der Lenksäule von Figur 3;
- Figur 5:: eine Seitenansicht eines Mantelrohrs mit Zahnstange und elektrischer Verstellung;
- Figur 6:: eine perspektivische Ansicht eines Mantelrohrs mit Lenkspindel und außen angebrachter Zahnstange;
- Figur 7:: eine Draufsicht auf das Mantelrohr von Figur 6;
- Figur 8:: eine Draufsicht ähnlich Figur 7 auf ein Mantelrohr mit teilweise entfernter Zahnstange, bei dem ein Biegedraht vor einem Crash erkennbar ist;
- Figur 9:: eine Detailansicht eines Mantelrohrs, bei dem der Biegedraht nach dem Crash dargestellt ist;
- Figur 10:: eine perspektivische Ansicht eines Mantelrohrs mit Lenkspindel und einer auf einer weiteren Ausführungsform einer Energieabsorptionsvorrichtung angeordneten Zahnstange in einer abgewandelten Ausführungsform;
- Figur 11:: eine Energieabsorptionsvorrichtung mit Langloch und Gleitstein vor einem Crash;
- Figur 12:: die Energieabsorptionsvorrichtung von Figur 12 nach einem Crash.

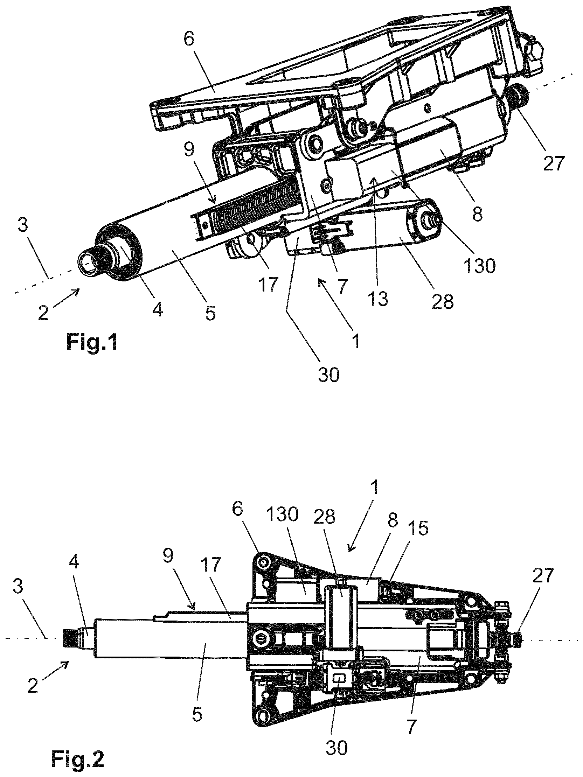

Wie man in den Figuren 1-5 erkennt, besitzt eine erfindungsgemäße elektrisch verstellbare Lenksäule 1 für ein Kraftfahrzeug eine um ihre Drehachse 3 drehbare Lenkspindel 2, welche zwei Spindelteile 4, 27 aufweist, die drehfest miteinander verbunden, jedoch teleskopisch gegeneinander verschiebbar sind. Das obere Spindelteil 4, welches ein nicht gezeigtes Lenkrad des Kraftfahrzeugs trägt, ist gegenüber dem Spindelteil 27 axial verschiebbar. Das untere Spindelteil 27 ist axial fest angeordnet. Das obere Spindelteil 4 ist in einem Mantelrohr 5 drehbar gelagert. Das Mantelrohr 5 selbst ist in einem Führungskasten 7 axial verschiebbar gelagert, so dass es zusammen mit dem oberen Spindelteil 4 gegenüber dem Führungskasten 7 in Axialrichtung verstellt werden kann, wobei das nicht gezeigte Lenkrad axial verstellt wird.

Die axiale Verstellung erfolgt mittels eines Elektromotors 8, welcher über ein Untersetzungsgetriebe 13 mit einem Schneckenrad 11 verbunden ist, welches in eine auf der Außenseite 26 des Mantelrohrs 5 angebrachten Zahnstange 9, 10, 29 in Eingriff steht.

Der Führungskasten 7 ist an einem mit der Karosserie des Kraftfahrzeugs fest verbundenen Halteteil 6 schwenkbar gelagert, um so das Mantelrohr 5 mit dem oberen Spindelteil 4 der Lenksäule zusammen mit dem nicht gezeigten Lenkrad in der Höhe zu verstellen. Für die elektrische Höhenverstellung ist ein zweiter Elektromotor 28 vorgesehen, der über ein zweites Getriebe 30 auf den Führungskasten 7 einwirkt, um den Führungskasten 7 gegenüber dem festen Halteteil 6 zu verschwenken. Siehe hierzu die Figuren 1 und 2. Die elektrische Höhenverstellung ist jedoch nicht Gegenstand der vorliegenden Erfindung und wird daher nicht detaillierter beschrieben.

Der für die elektrische Längsverstellung der Lenksäule 1 zuständige Elektromotor 8 ist auf der Außenseite des Führungskastens 7 befestigt. Dies gilt auch für einen vom Elektromotor 8 über das Untersetzungsgetriebe 13 angetriebenes Schneckenrad 11, dessen welle 31 ebenfalls auf der Außenseite des Führungskastens 7 gelagert ist. Es ist weiterhin denkbar und möglich, das Untersetzungsgetriebe 13, das Schneckenrad 11 und den Elektromotor 8 im Getriebegehäuse 130 zu lagern. Das Untersetzungsgetriebe 13 besteht aus einem auf der welle 31 des Schneckenrades 11 drehfest angebrachten größeren Zahnrad 14, welches mit einem auf der Motorwelle 15 des Elektromotors 8 drehfest angebrachten kleineren Zahnrad 16 in Eingriff steht.

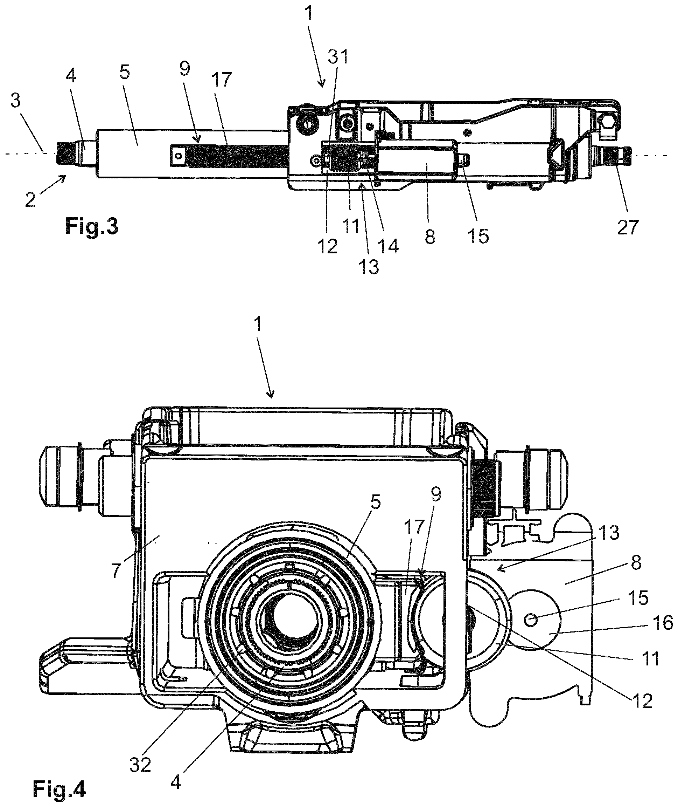

Wie man am besten in den Figuren 3-5 erkennt, ist das Schneckenrad 11 in Eingriff mit der Verzahnung der Zahnstange 9. Um dies zu ermöglichen, weist der Führungskasten 7 eine Öffnung 12 auf, durch die hindurch das Schneckenrad 11 in den Innenraum des Führungskastens 7 ragt und mit der Zahnstange 9 in Eingriff kommt. Dies ist am besten in den Figuren 3 und 4 erkennbar.

Wird der Elektromotor 8 eingeschaltet, so setzt er über das Untersetzungsgetriebe 13 das Schneckenrad 11 in Drehung, welches wiederum die Zahnstange 9 in Drehachsrichtung 19 verschiebt. Die verschieberichtung kann umgedreht werden, indem der Elektromotor 8 so angesteuert wird, dass sich seine Drehrichtung umkehrt. Da die Zahnstange 9 fest mit dem Mantelrohr 5 verbunden ist, nimmt die Zahnstange 9 bei ihrer Axialverschiebung das Mantelrohr 5 mit, welches seinerseits über ein wälzlager 32 (siehe Figuren 4, 6 und 10) den oberen Spindelteil 4 der Lenkspindel 2 mitnimmt und diese zusammen mit dem nicht gezeigten Lenkrad in Drehachsrichtung 19 verstellt.

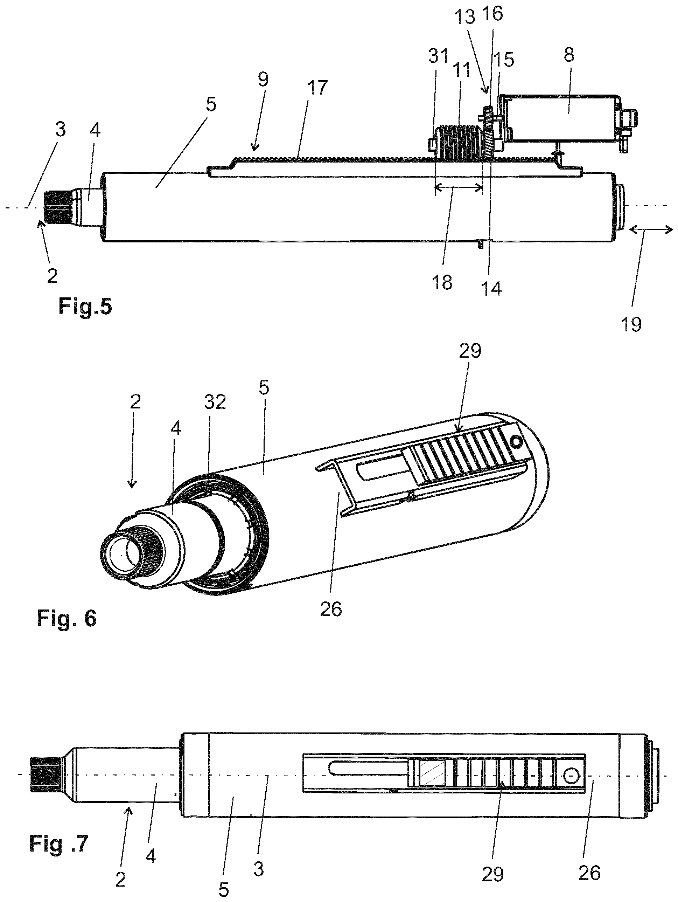

Im Grunde funktioniert die Längsverstellung mit den in den Figuren 6-8 und 10 gezeigten modifizierten Zahnstangen 10, 29 genauso, wenn diese mit dem Schneckenrad 11 eines angepassten elektrischen verstellmechanismus zusammenwirken.

Wie man am besten in den Figuren 1, 4 und 10 erkennt, ist eine mit dem jeweiligen Schneckenrad 10 in Eingriff stehende Außenseite 17 der Zahnstange 9, 10 in Form einer Rinne mit teilkreisförmigem Profil ausgestaltet, wobei der Radius des Teilkreises des Profils der Außenseite 17 auf den Radius des Schneckenrades 11 abgestimmt ist. Dadurch wird erreicht, dass eine möglichst große Fläche der zahnflanken der Zahnstange 9, 10 mit einer möglichst großen Fläche der Schneckenflanken des Schneckenrades 11 in Berührung kommt. Dadurch werden die zu übertragenden Axialkräfte auf eine größere Fläche verteilt, so dass bei gegebener Axialkraft die Flächenbelastung der miteinander in Eingriff stehenden Flächen verringert wird. Hierdurch wird bei der Übertragung von hohen Axialkräften, die während eines Crash des Kraftfahrzeugs in Drehachsrichtung 19 auf die Lenksäule 1 einwirken können, verhindert, dass das Schneckenrad 11 außer Eingriff mit der Zahnstange 9, 10 gerät, beispielsweise weil das Material der Zahnstange 9, 10 oder des Schneckenrades 11 nachgibt.

Die beschriebene Vergrößerung der miteinander in Eingriff stehenden Flächen erlaubt sogar die Herstellung einer Zahnstange 9, 10 aus Kunststoff, wodurch die Fertigungskosten gesenkt werden können, ohne dass die Festigkeit der Lenksäule 1 im Crashfall unzureichend würde.

Die mit der Zahnstange 9, 10, 29 in Eingriff stehenden Flächen der Schneckenflanke des Schneckenrades 11 werden größer, wenn man die Länge der Schnecke und letztlich die Länge 18 des Schneckenrades 11 vergrößert und umgekehrt. Geht man von einer im Crashfall auftretenden maximalen Axialkraft in Drehachsrichtung 19 aus, so lässt sich bei gegebener Paarung von Schneckenrad 11 und Zahnstange 9, 10, 29 bestimmen, wie groß die Länge 18 des Schneckenrades 11 mindestens sein muss, um genügend Flankenfläche der Schnecke zur Übertragung der gegebenen Axialkraft auf die Zahnstange 9, 10, 29 bereitzustellen, ohne dass das Schneckenrad 11 gegenüber der Zahnstange 9, 10, 29 außer Eingriff kommt und abrutscht. Begrenzt man nun die Länge 18 des Schneckenrades 11 auf den so erhaltenen wert, so kann man Überdimensionierung und damit erhöhte Herstellungskosten für das Schneckenrad 11 vermeiden. Diese Maßnahme hat außerdem noch den vorteil, dass ein kurzes Schneckenrad 11 mit geringer Länge 18 auch eine in Drehachsrichtung 19 verkleinerte Öffnung 12 im Führungskasten 7 ermöglicht. Eine kleinere Öffnung 12 wiederum schwächt den Führungskasten 7 weniger als dies eine größere Öffnung täte. Durch die Begrenzung der Länge 18 des Schneckenrades 11 kann somit die Steifigkeit des Führungskastens 7 verbessert werden.

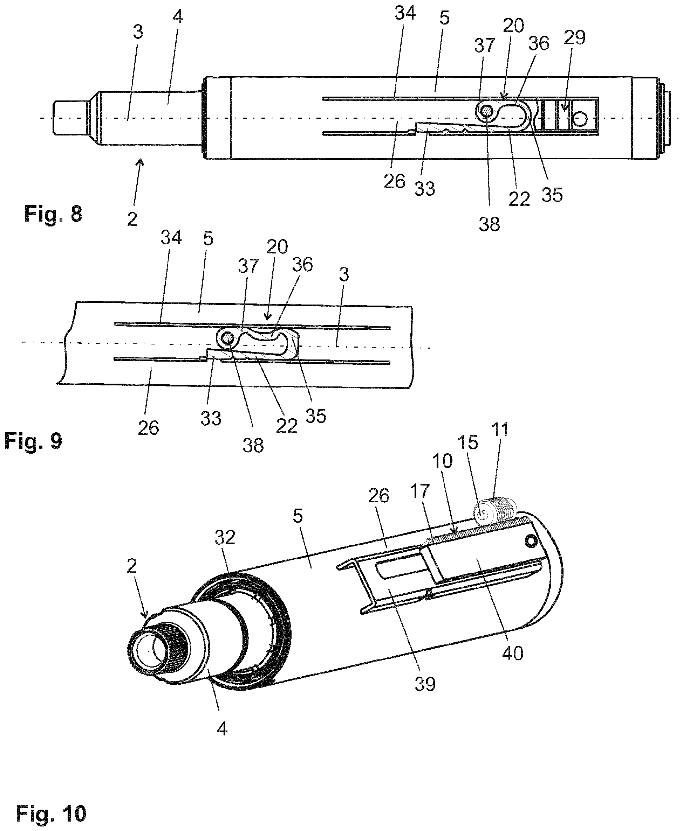

In den Figuren 6-12 ist die Anordnung einer Energieabsorptionsvorrichtung 20, 21 dargestellt, die wirkungsmäßig zwischen dem Mantelrohr 5 und der jeweiligen Zahnstange 10, 29 angeordnet ist. Die Energieabsorptionsvorrichtung kann, wie in den Figuren 8 und 9 dargestellt ist, einen Biegedraht 22 aufweisen, der mit seinem festen Ende 33 an einer Schiene 34 abgestützt ist, welche auf der Außenseite 26 des Mantelrohrs 5 befestigt ist. Im Bereich 35 ist der Biegedraht 22 um ca. 180° umgebogen, wobei ein kürzerer Bereich 36 in die Gegenrichtung verläuft und in eine Öse 37 endet, die mittels eines Bolzens 38 mit der Zahnstange 29 verbunden ist.

Wenn nun bei einem Fahrzeugcrash starke Axialkräfte in Richtung Lenkrad auftreten, so werden diese über die Fahrzeugkarosserie auf das Halteteil 6, vom Halteteil 6 auf den Führungskastens 7 und vom Führungskasten 7 über das Schneckenrad 11 auf die Zahnstange 29 übertragen, welche ihrerseits über den Bolzen 38 mit dem Biegedraht 22 in Verbindung steht und den Biegedraht 22 in Axialrichtung mitnimmt, wobei sich dieser verformt und der um 180° um gebogene Bereich 53 näher an das fixierte Ende 33 des Biegedrahts 22 rückt. Letztere Situation ist in Figur 9 dargestellt.

Bei dem Biegevorgang wird kinetische Energie in verformungsenergie des Biegedrahts 22 umgewandelt und damit die in Axial richtung auf das nicht gezeigte Lenkrad hin einwirkende Kraft verringert, um so die verletzungsgefahr für den Fahrer herabzusetzen.

Im umfang des verschiebeweges, den der Biegedraht 22 ermöglicht, kann daher der mit dem Kraftfahrzeug fest verbundene Teil der Lenksäule 2 in Richtung Lenkrad verschoben werden, ohne dass sich dabei das Mantelrohr 5 mit dem Spindelteil 4 und dem Lenkrad in Richtung Fahrer verschiebt.

Umgekehrt könnte sich das Lenkrad zusammen mit dem Spindelteil 4 und dem Mantelrohr gegenüber dem übrigen Teil der Lenksäule 1 und gegenüber der Fahrzeugkarosserie in Richtung Fahrzeugfront verschieben, beispielsweise wenn der Fahrer nach einem Fahrzeugcrash auf das Lenkrad aufprallt. Dadurch wird der für das Auffangen des Gewichtes des Fahrers zur Verfügung stehende weg vergrößert und die beim Aufprall auf das Lenkrad auftretenden Beschleunigungskräfte verringert.

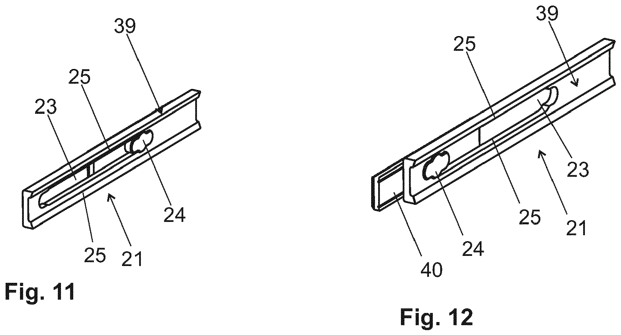

Bei einer in den Figuren 10-12 gezeigten zweiten Energieabsorptionsvorrichtung 21 ist eine modifizierte Schiene 39 auf der Außenseite 17 des Mantelrohrs 5 fest angebracht. Die Schiene 39 besitzt ein Langloch 23. Auf der Schiene 39 ist ein Schlitten 40 angeordnet, der die Zahnstange 10 trägt. Der Schlitten ist fest mit einem Gleitstein 24 verbunden (siehe Figuren 11 und 12), welcher in das Langloch 23 der Schiene 39 hineinragt. Der Gleitstein 24 ist etwas breiter als die Breite des Langlochs 23, so dass er nur unter Aufwendung einer erheblichen Axialkraft durch das Langloch 23 gezogen werden kann. Wenn über das Schneckenrad 11 Crashkräfte auf die Zahnstange 10 und damit auf den Schlitten 40 einwirken, wird der Gleitstein 24 durch das Langloch 23 gezogen, und verformt sich das Material 25 der Schiene 39 an den das Langloch 23 begrenzenden Kanten, wobei kinetische Energie absorbiert und zur Verformung des Materials 25 verwendet wird.

Die erfindungswesentliche Anordnung der Zahnstange 9, 10, 29 auf der Außenseite des Mantelrohres 5 in Verbindung mit der Anordnung des Elektromotors 8 und des Getriebes 13 mit dem Schneckenrad 11 auf der Außenseite des Führungskastens 7 erlaubt die beschriebene Anordnung der Energieabsorptionsvorrichtungen 20, 21 wirkungsmäßig zwischen der Außenseite 17 des Mantelrohrs 5 und der jeweiligen Zahnstange 9, 10, 29 in einer besonders einfachen und kostengünstig herstellbaren sowie kompakten Bauweise. Das erfindungsgemäße Konzept der elektrischen Längsverstellung ermöglicht bei geringem Bauraum eine hohe Steifigkeit und verstellwege, die größer als 180 mm sein können. Außerdem kann die erfindungsgemäße Längsverstellung an jeder Stelle im Umfang des Mantelrohrs 5 positioniert werden und die Erfindung ist nicht auf die in den Figuren gezeigte Position beschränkt.

### BEZUGSZEICHENLISTE

- 1: Lenksäule
- 2: Lenkspindel
- 3: Drehachse
- 4: Spindelteil
- 5: Mantelrohr
- 6: Halteteil
- 7: Führungskasten
- 8: Elektromotor
- 9: Zahnstange
- 10: Zahnstange
- 11: Schneckenrad
- 12: Öffnung
- 13: Untersetzungsgetriebe
- 14: größeres Zahnrad
- 15: Motorwelle
- 16: kleineres Zahnrad
- 17: rinnenförmige Außenseite
- 18: Längen
- 19: Drehachsrichtung
- 20: erste Energieabsorptionsvorrichtung
- 21: zweite Energieabsorptionsvorrichtung
- 22: Biegedraht
- 23: Langloch
- 24: Gleitstein
- 25: Material
- 26: Außenseite
- 27: Spindelteil
- 28: zweiter Elektromotor
- 29: Zahnstange
- 30: zweites Getriebe
- 31: welle
- 32: wälzlager
- 33: festes Ende
- 34: Schiene
- 35: Bereich
- 36: Bereich
- 37: Öse
- 38: Bolzen
- 39: Schiene
- 40: Schlitten
- 130: Getriebegehäuse

## Patentansprüche

1. verstellbare Lenksäule für ein Kraftfahrzeug, mit einer drehbaren Lenkspindel (2), die einen längs ihrer Drehachse (3) axial verschiebbaren Spindelteil (4) aufweist, der in einem Mantelrohr (5) drehbar gelagert ist, welches in einem an einem karosseriefesten Halteteil (6) gehaltenen Führungskasten (7) axial gleitend gelagert und mittels eines Elektromotors (8) verstellbar ist, wobei auf der Außenseite (26) des Mantelrohrs (5) eine Zahnstange (9, 10, 29) angebracht ist, dass der Elektromotor (8) an dem Führungskasten (7) befestigt ist und ein Schneckenrad (11) antreibt, welches durch eine Öffnung (12) des Führungskastens (7) in Richtung des Mantelrohrs (5) hindurchragt und mit der Zahnstange (9, 10, 29) in Eingriff steht, **dadurch gekennzeichnet, dass** wirkungsmäßig zwischen dem Mantelrohr (5) und der Zahnstange (9, 10, 29) eine Energieabsorptionsvorrichtung (20, 21) angeordnet ist, die im Crashfall eine axiale Verschiebung der Zahnstange (9, 10, 29) gegenüber dem Mantelrohr (5) unter Überwindung einer bauartbedingten verformungskraft erlaubt.

2. Lenksäule nach Anspruch 1, **dadurch gekennzeichnet, dass** wirkungsmäßig zwischen dem Elektromotor (8) und dem Schneckenrad (11) ein Untersetzungsgetriebe (13) angeordnet ist.

3. Lenksäule nach Anspruch 2, **dadurch gekennzeichnet, dass** das Untersetzungsgetriebe (13) ein mit dem Schneckenrad (11) drehfest verbundenes größeres Zahnrad (14) aufweist, welches mit einem auf der Motorwelle (15) des Elektromotors (8) befestigten kleineren Zahnrad (16) in Eingriff steht.

4. Lenksäule nach einem der vorhergehenden Ansprüche, **dadurch gekennzeichnet, dass** die Zahnstange (9, 10, 29) aus Kunststoff besteht.

5. Lenksäule nach einem der vorhergehenden Ansprüche, **dadurch gekennzeichnet, dass** die Zahnstange (9, 10) eine rinnenförmig gebogene Außenseite (17) aufweist, deren Biegungsradius an den Radius des Schneckenrades (11) angepasst ist.

6. Lenksäule nach einem der vorhergehenden Ansprüche, **dadurch gekennzeichnet, dass** die Länge (18) des Schneckenrades (11) in Drehachsrichtung (19) an die im Crashfall zu übertragenen Kräfte angepasst ist.

7. Lenksäule nach Anspruch 1, **dadurch gekennzeichnet, dass** die Energieabsorptionsvorrichtung (20) einen unter der verformungskraft verformbaren Biegedraht (22) aufweist.

8. Lenksäule nach Anspruch 1, **dadurch gekennzeichnet, dass** die Energieabsorptionsvorrichtung (21) einen in einem Langloch (23) angeordneten Gleitstein (24) aufweist, der unter der verformungskraft durch das Langloch (23) verschiebbar ist und dabei ein an das Langloch (23) angrenzendes Material (25) verformt.

## Claims

1. Adjustable steering column for a motor vehicle, comprising a rotatable steering shaft (2) which has a shaft part (4) that can be displaced axially along its axis of rotation (3), which shaft part is rotatably mounted in a jacket tube (5) which is mounted in an axially sliding manner in a guide box (7) held on a retaining part (6) fixed to the vehicle body and can be displaced by means of an electric motor (8), **wherein** a gear rack (9, 10, 29) is attached to the outer face (26) of the jacket tube (5), that the electric motor (8) is fastened to the guide box (7) and drives a worm gear (11) which protrudes through an opening (12) in the guide box (7) towards the jacket tube (5) and meshes with the gear rack (9, 10, 29), **characterized in that** an energy absorption device (20, 21) is arranged in an operative manner between the jacket tube (5) and the gear rack (9, 10, 29), which energy absorption device allows an axial displacement of the gear rack (9, 10, 29) in respect of the jacket tube (5) in the event of a crash while overcoming a design-related deformation force.

2. Steering column according to Claim 1, **characterized in that** a reduction gear (13) is arranged in an operative manner between the electric motor (8) and the worm gear (11).

3. Steering column according to Claim 2, **characterized in that** the reduction gear (13) has a larger gear wheel (14) connected to the worm gear (11) in a non-rotational manner, which larger gear wheel meshes with a smaller gear wheel (16) fastened on the motor shaft (15) of the electric motor (8).

4. Steering column according to one of the preceding claims, **characterized in that** the gear rack (9, 10, 29) is made of plastic.

5. Steering column according to one of the preceding claims, **characterized in that** the gear rack (9, 10) has an outer face (17) curved in a channel-shaped manner, the bending radius whereof is adapted to the radius of the worm gear (11).

6. Steering column according to one of the preceding claims, **characterized in that** the length (18) of the worm gear (11) in the axis of rotation direction (19) is adapted to the transmitted forces in the event of a crash.

7. Steering column according to Claim 1, **characterized in that** the energy absorption device (20) has a bending wire (22) that can be deformed under the deformation force.

8. Steering column according to Claim 1, **characterized in that** the energy absorption device (21) has a sliding block (24) arranged in an elongate hole (23) which is displaceable under the deformation force through the elongate hole (23) and in this case deforms a material (25) adjacent to the elongate hole (23).

## Revendications

1. Colonne de direction réglable pour un véhicule automobile, avec un arbre de direction rotatif (2), qui présente une partie d'arbre (4) déplaçable axialement le long de son axe de rotation (3), qui est supportée de façon rotative dans un tube enveloppe (5), qui est monté de façon glissante axialement dans un caisson de guidage (7) maintenu sur une partie de maintien (6) fixe sur la carrosserie et qui est déplaçable au moyen d'un moteur électrique (8), dans laquelle une crémaillère (9, 10, 29) est agencée sur le côté extérieur (26) du tube enveloppe (5), que le moteur électrique (8) est fixé au caisson de guidage (7) et entraîne une roue à vis (11), qui passe à travers une ouverture (12) du caisson de guidage (7) en direction du tube enveloppe (5) et qui est en prise avec la crémaillère (9, 10, 29), **caractérisée en ce qu'**un dispositif d'absorption d'énergie (20, 21) est fonctionnellement disposé entre le tube enveloppe (5) et la crémaillère (9, 10, 29), qui en cas de collision permet un déplacement de la crémaillère (9, 10, 29) par rapport au tube enveloppe (5) en surmontant une force de déformation définie par construction.

2. Colonne de direction selon la revendication 1, **caractérisée en ce qu'**un engrenage de démultiplication (13) est fonctionnellement disposé entre le moteur électrique (8) et la roue à vis (11).

3. Colonne de direction selon la revendication 2, **caractérisée en ce que** l'engrenage de démultiplication (13) présente une plus grande roue dentée (14) assemblée de façon calée en rotation à la roue à vis (11), et qui est en prise avec une plus petite roue dentée (16) fixée sur l'arbre de moteur (15) du moteur électrique (8).

4. Colonne de direction selon l'une quelconque des revendications précédentes, **caractérisée en ce que** la crémaillère (9, 10, 29) se compose de matière plastique.

5. Colonne de direction selon l'une quelconque des revendications précédentes, **caractérisée en ce que** la crémaillère (9, 10) présente un côté extérieur (17) courbé en forme de rigole, dont le rayon de courbure est adapté au rayon de la roue à vis (11).

6. Colonne de direction selon l'une quelconque des revendications précédentes, **caractérisée en ce que** la longueur (18) de la roue à vis (11) dans la direction de l'axe de rotation (19) est adaptée aux forces à transmettre en cas de collision.

7. Colonne de direction selon la revendication 1, **caractérisée en ce que** le dispositif d'absorption d'énergie (20) présente un fil de flexion (22) déformable sous la force de déformation.

8. Colonne de direction selon la revendication 1, **caractérisée en ce que** le dispositif d'absorption d'énergie (21) présente un coulisseau (24) disposé dans un trou oblong (23), qui est déplaçable à travers le trou oblong (23) sous la force de déformation et qui déforme ainsi un matériau (25) adjacent au trou oblong (23).
